(19) Europäisches Patentamt
European Patent Office
Office européen des brevets

(11) **EP 2 983 348 A1**

(12) **EUROPEAN PATENT APPLICATION**

(43) Date of publication:
**10.02.2016 Bulletin 2016/06**

(51) Int Cl.:
**H04M 11/06** *(2006.01)* **H04B 3/46** *(2006.01)*

(21) Application number: **14306244.6**

(22) Date of filing: **06.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Wahibi, Issam**
**2018 Antwerpen (BE)**

• **Drooghaag, Benoît**
**6041 Gosselies (BE)**

(74) Representative: **D'Halleweyn, Nele Veerle Trees**
**Gertrudis et al**
**Arnold & Siedsma**
**Bezuidenhoutseweg 57**
**2594 AC The Hague (NL)**

Remarks:
Amended claims in accordance with Rule 137(2) EPC.

(54) **Method and apparatus for analysing vectoring groups**

(57)    A network analysis method for analysing vectoring groups in a communication system with a plurality of channels between an access node and a plurality of end user nodes and with an internal crosstalk cancellation mechanism for reducing or cancelling internal crosstalk between said plurality of channels, comprising measuring at least one first parameter of said communication system during normal operation of said communication system; estimating at least one second parameter of said communication system assuming uniform application status of said internal crosstalk cancellation mechanism, based on said measured at least one first parameter; estimating at least one third parameter of said communication system assuming non-uniform application status of said internal crosstalk cancellation mechanism, based on said first parameter; computing at least one vectoring difference between said second parameter and said third parameter; and providing a notification for an operator of said communication system based on said vectoring difference.

FIG. 3

EP 2 983 348 A1

## Description

Field of the Invention

The field of the invention relates to network analysis. Particular embodiments relate to a network analysis method for analysing vectoring groups in a communication system, a network analyser for analysing vectoring groups in a communication system and a computer program product for analysing vectoring groups in a communication system.

Background

Vectoring technology has allowed DSL (Digital Subscriber Line) operators to maintain copper support for digital transmissions as a lower-cost alternative to an expensive investment in fibre deployment. This technology is based on the cancellation (or at least reduction) of interference from other DSL lines by performing a pre-compensation (at the transmission) or cancellation (at the receiver) of the crosstalk by exploiting multi-user level coordination in DSLAMs (DSL Access Multiplexers).

Vectoring technology becomes more and more mature and has therefore been selected by several DSL operators for large-scale deployment. These operators want to know the performance and efficiency of their vectoring groups that are deployed in the field. These two concepts can be defined as follows:

- Vectoring group performance: A vectoring group will be considered to have good performance if the gain in terms of bitrate brought by the vectoring is significant for each line.
- Vectoring group efficiency: A vectoring group will be considered efficient if the majority of lines share the same physical binder and create significant crosstalk between them.

Operators want to quantify these two notions for a good view of all their vectoring groups. More in particular, this information could help a Network Analyser to propose a rewiring strategy to optimize the performance and the efficiency of the vectoring groups. For instance, operators will be able to detect a line which does not share the same binder as the other lines but is a member of the same vectoring group.

A difficulty in quantifying these two notions is to use only operational parameters, i.e. (scalar) parameters that can efficiently be determined during normal operation of the system. It is not scalable to quantify these notions using carrier data vectors (or frequential vectors), such as Hlog (direct transfer function or direct channel gain), PSD (Power Spectral Density), QLN (Quiet-Line Noise), ..., since these require a lot of memory, resources and complexity, and they are measured during line initialisation, which requires forced line resynchronization, which is service-intrusive.

Despite recent enthusiasm for vectoring lines over non-vectoring VDSL (Very-high bitrate DSL) lines, operators have no access to efficient ways to assess the performance and the efficiency of vectoring groups as defined above. Most of these assessments are carried out as a field trial on a limited sample of vectoring lines, and are not scalable since they require service disruption. Other known approaches (see patent application EP 13 306 636 in the name of the Applicant) to estimate the performance of vectoring lines provide the total bitrate gain brought by the cancellation of all disturbers. Operators would however be interested in knowing the bitrate gained by cancellation of each disturber or the cost in terms of bitrate if a given disturber is not cancelled in a vectoring context. This information can help the Network Analyser to propose a rewiring strategy to optimize the performance and the efficiency of the vectoring groups.

Summary

It is an object of embodiments of the present invention to efficiently analyse the performance and/or efficiency of vectoring groups in a communication system equipped with an internal crosstalk cancellation mechanism. In particular embodiment such an analysis allows to propose a rewiring strategy to optimize the performance and the efficiency of said vectoring groups.

According to a first aspect of the invention, there is provided a network analysis method for analysing vectoring groups in a communication system with a plurality of channels between an access node and a plurality of end user nodes, said communication system being equipped with an internal crosstalk cancellation mechanism for reducing or cancelling internal crosstalk between said plurality of channels. Said method comprises: measuring at least one first parameter of said communication system during normal operation of said communication system, preferably at said access node; estimating at least one second parameter of said communication system under assumption of a uniform application status of said internal crosstalk cancellation mechanism, based on said measured at least one first parameter; estimating at least one third parameter of said communication system under assumption of a non-uniform application status of said internal crosstalk cancellation mechanism, based on said measured at least one first parameter; computing at least one vectoring difference between said at least one second parameter and said at least one third parameter; and

providing a notification for an operator of said communication system based on said computed at least one vectoring difference.

In the present specification, the following expressions are to be interpreted using the following indications:

'Frequential vectors' (or 'carrier data vectors') are frequency-dependent vectors of elements which correspond to different frequencies. They are used in frequency-division multiplexing where the total available bandwidth is divided into a series of non-overlapping frequency sub-bands and each of them is able to carry a separate signal. Frequential vectors cannot be determined without system service disruption.

'Operational parameters' are (scalar) parameters that do not depend on frequency, and that can be measured during normal system operation.

'Hlog' gives the direct transfer function or the direct channel gain.

'Quiet Line Noise' (QLN) is the noise on the transmission line (channel) when the line is not carrying a data signal.

'Far-End Crosstalk' (FEXT) is the interference between two pairs of a cable measured at the other end of the cable with respect to the interfering transmitter (as opposed to Near-End Crosstalk). 'Power Spectral Density' (PSD) describes how the power of a signal or time series is distributed over the different frequencies.

In this manner, by measuring only one or more first parameters that are operational parameters (that can be measured efficiently during normal operation of the communication system) and by estimating one or more second and one or more third parameters without having to disrupt normal operation of the communication system, it is possible to compute one or more vectoring differences and thereby efficiently analyse vectoring groups in the communication system, or more in particular the efficiency and/or performance of said vectoring groups. The efficiency is gained at least in part by not having to cede normal operation (the service of the communication system to its users or customers is not disrupted) in order to analyse the vectoring groups in detail. Embodiments may thereby be completely transparent for users or customers. For sake of completeness, embodiments of the invention find application for any MIMO (Multiple-input Multiple-output) system with an interference cancellation method.

According to an embodiment, said at least one first parameter comprises at least one parameter representative for at least one of the following: an actual bitrate; an attainable bitrate; an actual noise margin; an electrical length; a loop length; an attenuation; and an actual used (i.e. transmitted) power. It will be appreciated that parameters representative for any of these are operational parameters, that can be measured efficiently during normal system operation. The skilled person is well aware of how to measure (parameters representative for) said actual bitrate, said attainable bitrate, said actual noise margin, said electrical length, said loop length, said attenuation and said actual used power.

According to an embodiment, said at least one first parameter comprises, for each pair of channels of said plurality of channels, a crosstalk coefficient representative for far-end crosstalk.

According to an embodiment, said at least one second parameter and said at least one third parameter each comprise a parameter representative for a bitrate of a channel of said plurality of channels.

According to an embodiment, said estimating of said at least one second parameter under assumption of uniform application status of said internal crosstalk cancellation mechanism comprises: estimating said at least one second parameter for a situation in which crosstalk across said plurality of channels is not cancelled or reduced; and/or estimating said at least one second parameter for a situation in which crosstalk is cancelled or reduced across all channels of said plurality of channels. Said estimating of said at least third parameter under assumption of non-uniform application status of said internal crosstalk cancellation mechanism comprises: estimating said at least one third parameter for a situation in which crosstalk is cancelled or reduced for only one channel of said plurality of channels; and/or estimating said at least one third parameter for a situation in which crosstalk is cancelled or reduced for all but one channel of said plurality of channels.

According to an embodiment, said providing of said notification is based on at least one pre-determined threshold comprising a statistical parameter representative of a performance and/or an efficiency of at least one vectoring group of said plurality of channels.

According to an embodiment, said measuring of said at least one first parameter is performed for each pair of channels of said plurality of channels; said estimating of said at least one second parameter and said estimating of said at least one third parameter are performed for each of said pairs, based on said corresponding at least one first parameter; and said computing of said at least one vectoring difference is performed for each of said pairs, thereby computing at least one vectoring matrix whose elements are said vectoring differences, for use in said providing of said notification.

According to an aspect of the invention, there is provided a network analyser for analysing vectoring groups in a communication system with a plurality of channels between an access node and a plurality of end user nodes, said communication system being equipped with an internal crosstalk cancellation mechanism for reducing or cancelling internal crosstalk between said plurality of channels. Said system comprises: a measurement unit configured for measuring at least one first parameter of said communication system during normal operation of said communication system, preferably at said access node; an estimation unit configured for estimating at least one second parameter of said communication system under assumption of a uniform application status of said internal crosstalk cancellation mechanism, based on said measured at least one first parameter; and for estimating at least one third parameter of said communication system under assumption of a non-uniform application status of said internal crosstalk cancellation mechanism, based on said measured at least one first parameter; a computation unit configured for computing at least one vectoring difference between said at least one second parameter and said at least one third parameter; and a notification unit configured for providing a notification for an operator of said communication system based on said computed at least one vectoring difference.

The skilled person will understand that the hereinabove described considerations and advantages for the embodiments of the network analysis method also apply for the embodiments of the network analyser, mutatis mutandis.

According to an embodiment, said measurement unit is configured for measuring at least one parameter representative for at least one of the following: an actual bitrate; an attainable bitrate; an actual noise margin; an electrical length; a loop length; an attenuation; and an actual used power.

According to an embodiment, said measurement unit is configured for measuring, for each pair of channels of said plurality of channels, a crosstalk coefficient representative for far-end crosstalk.

According to an embodiment, said estimation unit is configured for estimating at least one parameter representative for a bitrate of a channel of said plurality of channels.

According to an embodiment, said estimation unit is configured for estimating said at least one second parameter under assumption of uniform application status of said internal crosstalk cancellation mechanism by: estimating said at least one second parameter for a situation in which crosstalk across said plurality of channels is not cancelled or reduced; and/or estimating said at least one second parameter for a situation in which crosstalk is cancelled or reduced across all channels of said plurality of channels. Said estimation unit is configured for estimating said at least one third parameter under assumption of non-uniform application status of said internal crosstalk cancellation mechanism by: estimating said at least one third parameter for a situation in which crosstalk is cancelled or reduced for only one channel of said plurality of channels; and/or estimating said at least one third parameter for a situation in which crosstalk is cancelled or reduced for all but one channel of said plurality of channels.

According to an embodiment, said notification unit is configured for providing said notification based on at least one pre-determined threshold comprising a statistical parameter representative of a performance and/or an efficiency of at least one vectoring group of said plurality of channels.

According to an embodiment, said measurement unit is configured for measuring said at least one first parameter for each pair of channels of said plurality of channels; said estimation unit is configured for estimating said at least one second parameter and said estimating of said at least one third parameter for each of said pairs, based on said corresponding at least one first parameter; and said computation unit is configured for computing said at least one vectoring difference for each of said pairs, thereby computing at least one vectoring matrix whose elements are said vectoring differences, for use in said providing of said notification.

According to an aspect of the invention, there is provided a computer program product comprising non-transitory computer-executable instructions for performing a method when the program is run on a computer, the method comprising all of the steps of any of the methods of any of the hereinabove described claims.

Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:

> Figure 1 illustrates an example crosstalk heatmap;
> Figure 2 illustrates a prior art method for estimating performance for vectoring lines;
> Figure 3 illustrates an exemplary vectoring cost matrix as generated by an exemplary embodiment of a method according to the present embodiment;
> Figure 4 illustrates an exemplary vectoring gain matrix as generated by an exemplary embodiment of a method according to the present embodiment;
> Figure 5 illustrates schematically an exemplary embodiment of a network analyser according to the present invention; and
> Figure 6 illustrates schematically an exemplary embodiment of a method according to the present invention.

Description of Embodiments

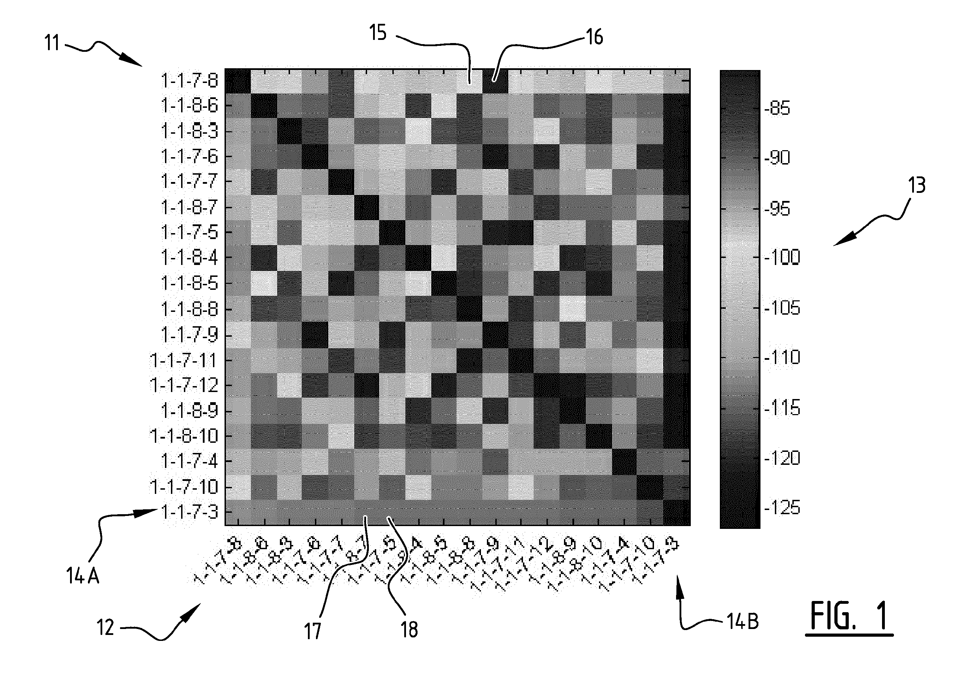

An approach for determining the general state of noise coming from the crosstalk between each line is to visualize a crosstalk heatmap. The crosstalk heatmap is a matrix which contains the normalized (with respect to Hlog) crosstalk coefficient averaged (by the Hlog value for each victim) over frequency (dBm/Hz) of each disturber line on each victim line. An example of such a heatmap is illustrated in figure 1, with disturber lines 11 (numbered according to rack, shelf, slot and port) on the heatmap rows and victim lines 12 (numbered according to a likewise scheme) on the heatmap columns, and wherein scale 13 shows the normalized crosstalk coefficient averaged over frequency, expressed in dBm/Hz. While these values show a more 16 or less 15 significant amount of crosstalk noise that is cancelled by the vectoring, they are difficult to interpret in terms of performance and efficiency, *inter alia* because the values shown for the victim lines of a given disturber line are averaged over different Hlog values. For this reason, the seemingly very similar values 17 and 18 for disturber line 14A (corresponding to victim line 14B) cannot be compared directly.

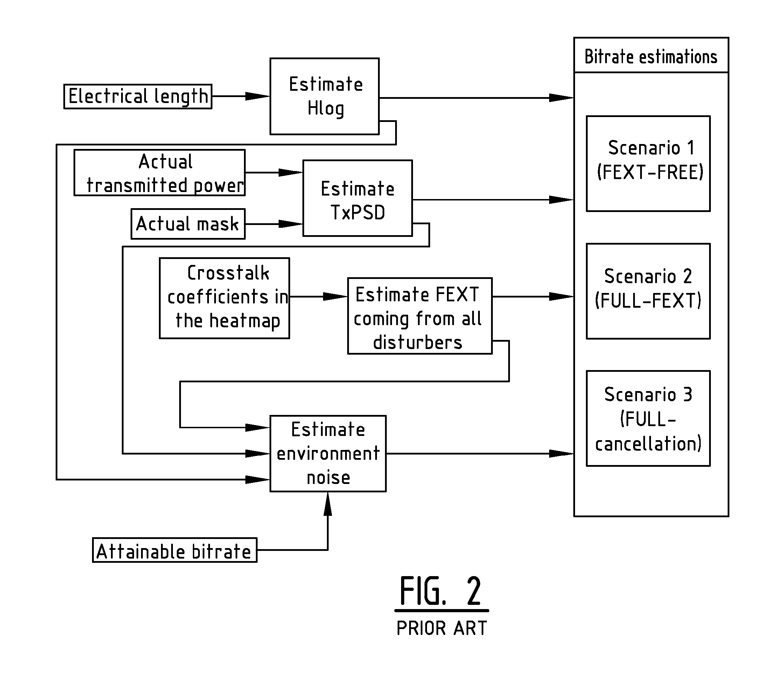

A known approach (see patent application EP 13 306 636 in the name of the Applicant) provides a non-service intrusive method for performance estimation for vectoring lines. The principle of an embodiment of this method is illustrated in figure 2. The method uses only operational parameters such as actual bitrate, attainable bitrates, actual noise margin, etc., which are scalar values collected regularly (e.g. daily, hourly or every fifteen minutes) by the Network Analyser (e.g. a 5530 NA-C) and that are easy to collect network-wide without service interruption. The method uses these operational parameters to estimate the different frequential vectors (Hlog, TxPSD (Transmitted Power Spectral Density), FEXT (Far-end Crosstalk) vectors) required for downstream and upstream bitrates computation in different scenarios:

- Scenario 1 (FEXT-FREE): DSL line of which all internal and alien crosstalk have been cancelled (best case).
- Scenario 2 (FULL-FEXT): DSL line which suffers from internal and alien crosstalk (worst case).
- Scenario 3 (FULL-CANCELLATION): DSL line of which only all internal crosstalk has been cancelled.

However, this method provides the total bitrate gain brought by the cancellation of all disturbers, whereas operators would be interested in knowing the bitrate gained by cancellation of each single disturber or the cost in terms of bitrate if a given disturber is not cancelled in a vectoring context. This information could help the Network Analyser to propose a rewiring strategy to optimize the performance and the efficiency of the vectoring groups. For instance, operators would be able to detect a line which does not share the same binder as the other lines but is a member of the same vectoring group.

An object of embodiments of the present invention is to provide to DSL operators an efficient way to analyse their vectoring groups regularly (e.g. daily, hourly, or even more frequently) efficiently, i.e. using only operational parameters and without interrupting the service. Therefore, all frequential vectors (Hlog, TxPSD, FEXT vectors) are estimated using operational parameters.

An exemplary embodiment of the present inventions concerns a network analysis method for analysing vectoring groups in a communication system with a plurality of channels between an access node and a plurality of end user nodes, said communication system being equipped with an internal crosstalk cancellation mechanism for reducing or cancelling internal crosstalk between said plurality of channels. The method comprises the following steps:

- measuring at least one first parameter of said communication system during normal operation of said communication system;
- estimating at least one second parameter of said communication system under assumption of a uniform application status of said internal crosstalk cancellation mechanism, based on said measured at least one first parameter;
- estimating at least one third parameter of said communication system under assumption of a non-uniform application status of said internal crosstalk cancellation mechanism, based on said measured at least one first parameter;
- computing at least one vectoring difference between said at least one second parameter and said at least one third parameter; and
- providing a notification for an operator of said communication system based on said computed at least one vectoring difference.

Said two assumptions mean that it is assumed that said internal crosstalk cancellation mechanism is uniformly applied or not applied (i.e. has a uniform application status, or in other words: is either enabled for all channels or for no channels at all), or that said internal crosstalk cancellation mechanism is non-uniformly applied (i.e. has a non-uniform application status, or in other words: is enabled for at least one but not for all channels - preferably for only one or for all but one). This means that, preferably, said estimating of said at least one second parameter under assumption of uniform application status of said internal crosstalk cancellation mechanism comprises:

- estimating said at least one second parameter for a situation in which crosstalk across said plurality of channels is not cancelled or reduced; and/or
- estimating said at least one second parameter for a situation in which crosstalk is cancelled or reduced across all channels of said plurality of channels; and

wherein said estimating of said at least third parameter under assumption of non-uniform application status of said internal crosstalk cancellation mechanism comprises:

- estimating said at least one third parameter for a situation in which crosstalk is cancelled or reduced for only one channel of said plurality of channels; and/or
- estimating said at least one third parameter for a situation in which crosstalk is cancelled or reduced for all but one channel of said plurality of channels.

The steps of the method will be further discussed below, in view of preferred and/or alternative features.

Preferably, the one or more first parameters may comprise at least one parameter representative for at least one of the following: an actual bitrate; an attainable bitrate; an actual noise margin; an electrical length; a loop length; an attenuation; and an actual used power. These are operational parameters, that can easily be measured or otherwise determined.

Preferably, the one or more first parameters comprises, for each pair of channels of said plurality of channels, a crosstalk coefficient representative for far-end crosstalk.

Preferably, the one or more second parameters and the one or more third parameters each comprise a parameter representative for a bitrate of a channel of said plurality of channels.

The one or more third and second parameters and the one or more vectoring differences will be discussed in more detail below in view of both vectoring gain and vectoring cost.

Vectoring gain is to be understood in that, if vectoring is assumed to be disabled, one considers the gain brought by the cancellation of each (single) disturber for a or each victim.

Vectoring cost is to understood in that, if vectoring is assumed to be enabled, one considers the cost brought by not cancelling each (single) disturber for a or each victim.

The skilled person will appreciate that either or both of these may be used to analyse the performance and/or efficiency of the vectoring groups, and that neither should be interpreted in a limiting way.

Techniques to estimate the following measures using one or more measured first (operational) parameters are known (see patent application EP 13 306 636 in the name of the Applicant):

- The frequential vector of the direct channel $\left|H_{ii}^{k}\right|^{2}$ can be estimated using the electrical length. The direct transfer function Hlog is estimated using the electrical length EL. The loop length L (in meters) is proportional to the electrical

  length: $L = 1000.\dfrac{EL}{a}$ with $\alpha \approx 21dB/km$ (alpha is a constant which depends on the cable type). Then, Hlog =

  20.log10($|H^{ii}|$) where $\left|H^{ii}\right| = \left|e^{-k.L.\sqrt{f}}\right|$ with k a constant which depends on the cable linear attenuation factor.

  Alternatively, Hlog is determined by use of the attenuation or loop attenuation. More generally speaking, a measure related to the channel transfer function is determined or estimated, and said measure is determined from parameters directly or indirectly related to the electrical length of the corresponding channel.

- The frequential vector of the transmitted PSD can be estimated using the transmitted power. The transmitted power (in dBm) can be converted to the Power Spectral Density (PSD) (dBm/Hz) with a given PSD mask, using e.g. the well-known water-filling algorithm.

- The frequential vector of the FEXT channels $\left|H_{ij}^{k}\right|^{2}$ can be estimated using the concept of an equivalent number of disturbers, Ndist, described in EP 2 383 899, in the name of the applicant, which is hereby incorporated by reference, or any equivalent method, combined with the crosstalk heatmap which contains the values of the averages of the normalized crosstalk coefficients.

- The noise $\sigma_{i}^{k}$ is a stationary white Gaussian noise set according to a CPE (Customer Premises Equipment) noise floor (for example -130 dBm/Hz).

To estimate a bitrate of a channel of said plurality of channels, Hlog, SNR, TxPSD and the FEXT channel frequential vector may be used. These frequential vectors are estimated, as described above, using said one or more measured first parameters. Said bitrate or a parameter representative for said bitrate may be used as said one or more second parameters and/or said one or more third parameters.

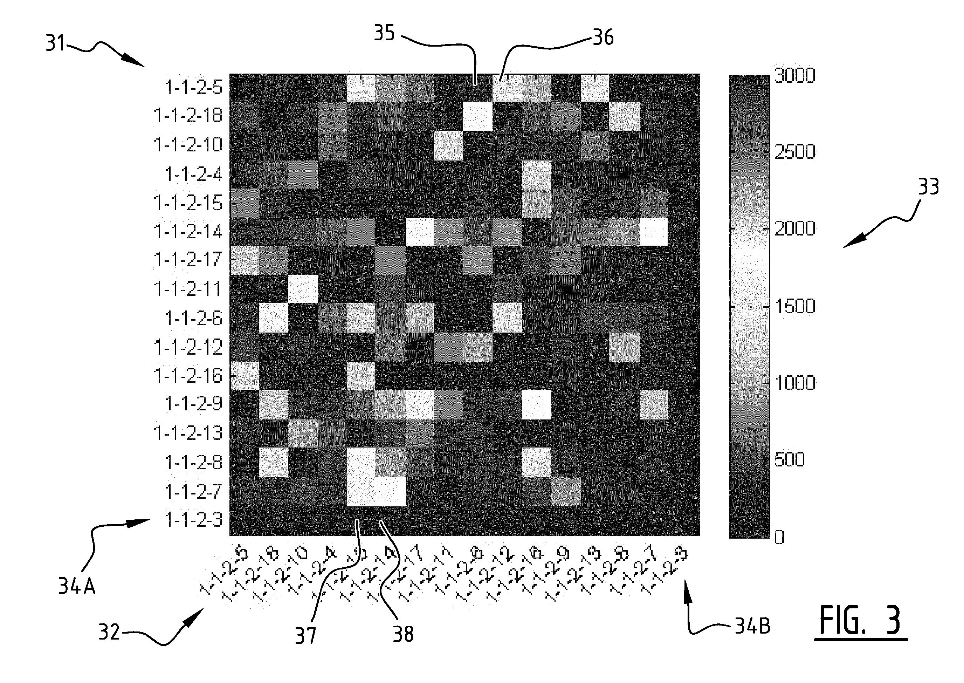

Figure 3 illustrates an exemplary vectoring cost matrix whose matrix elements 35-38 are vectoring differences as generated by an exemplary embodiment of a method according to the present embodiment for a SLV (System Level Vectoring) setup with 16 lines of 250 meters.

Consider first the view of vectoring cost. Assuming that vectoring is enabled, each element (each vectoring difference)

of this matrix $c_{ij}$ represents the cost in terms of bitrate represented by the non-cancellation of each disturber $j$ for each victim $i$. Therefore, the element $c_{ij}$ can be represented by the difference between a second parameter and a third parameter:

$$c_{ij} = b_{FULL\_CANCELLATION} - b_{FULL\_CANCELLATION\_EXCEPT\_j} \qquad \text{(Eq. 1)}$$

wherein $b_{FULL\_CANCELLATION}$ represents the bitrate when all disturbers which are members of the same vectoring group are cancelled, and $b_{FULL\_CANCELLATION\_EXCEPT\_j}$ represents the bitrate when all disturbers which are members of the same vectoring group are cancelled except disturber j. They can be written as:

$$b_{FULL\_CANCELLATION} = f_s \cdot \sum_k log_2 \left( 1 + \frac{\left| H_{ii}^k \right|^2 . TxPSD_i^k}{\Gamma . \sigma_i^k} \right) \qquad \text{(Eq. 2)}$$

$$b_{FULL\_CANCELLATION\_EXCEPT\_j} = f_s \cdot \sum_k log_2 \left( 1 + \frac{\left| H_{ii}^k \right|^2 . TxPSD_i^k}{\Gamma . \left( \left| H_{ij}^k \right|^2 . TxPSD_j^k + \sigma_i^k \right)} \right) \qquad \text{(Eq. 3)}$$

In these calculations, $f_s = 4{,}3125$ *kHz* is the tone space, $\Gamma$ the SNR (Signal-to-noise Ratio) gap (typically 9,75 dB) added to the actual noise margin, $\mathrm{TxPSD}_i^k$ the transmitted PSD (Power Spectral Density) for user i at tone k, $\left| H_{ii}^k \right|^2$ the direct channel transfer function for user i at tone k, $\sigma_i^k$ is the noise which contains the stationary white Gaussian noise and alien noise and $\left| \mathrm{H}_{ij}^k \right|^2$ is the FEXT channel from disturber j to victim i.

It will be clear to the skilled person that the above defined bitrates represent respectively a second parameter and a third parameter. Moreover, the skilled person will understand that the calculation offered here is only meant to illustrate a possible way of estimating such a second and such a third parameter, using only operational parameters as was discussed above. It will also be appreciated by the skilled person that these calculations can be performed in both the downstream and the upstream direction.

By expressing the vectoring differences in the vectoring cost matrix as bitrates in kbps (see scale 33), they are intuitively easy to understand and to interpret for operators.

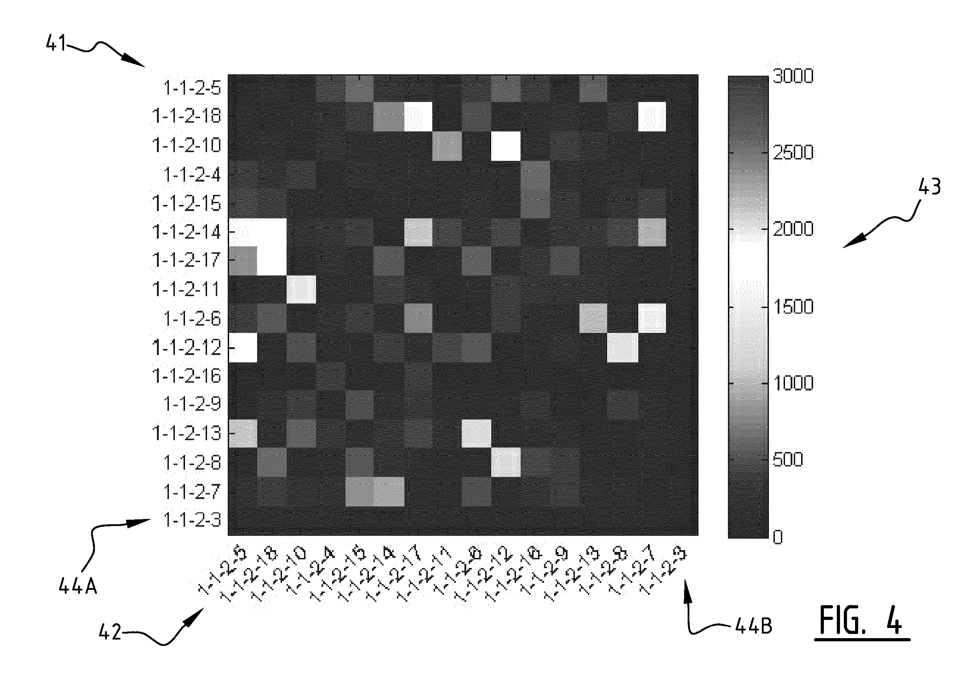

Figure 4 illustrates an exemplary vectoring gain matrix whose matrix elements are vectoring differences as generated by an exemplary embodiment of a method according to the present embodiment for a SLV (System Level Vectoring) setup with 16 lines of 250 meters.

Consider next the view of vectoring gain. Assuming that vectoring is disabled, each element (each vectoring difference) of this matrix $g_{ij}$ represents the gain in terms of bitrate brought by the cancellation of each disturber $j$ for each victim $i$. Therefore, the element $g_{ij}$ can be represented by the difference between a second parameter and a third parameter:

$$g_{ij} = b_{FULL\_FEXT} - b_{FULL\_FEXT\_EXCEPT\_j} \qquad \text{(Eq. 4)}$$

wherein $B_{FULL\_FEXT}$ represents the bitrate when the DSL line suffers from both internal and alien crosstalk, and $b_{FULL\_FEXT\_EXCEPT\_j}$ represents the bitrate when the DSL line suffers from both internal and alien crosstalk except the crosstalk coming from disturber j. They can be written as:

$$b_{FULL\_FEXT} = f_s \cdot \sum_k log_2 \left( 1 + \frac{\left| H_{ii}^k \right|^2 . TxPSD_i^k}{\Gamma . \left( \sum_{i \neq j} \left| \mathrm{H}_{ij}^k \right|^2 . TxPSD_j^k + \sigma_i^k \right)} \right) \qquad \text{(Eq. 5)}$$

$$b_{FULL\_FEXT\_EXCEPT\_j} = f_s \cdot \sum_k log_2 \left(1 + \frac{\left|H_{ii}^k\right|^2 \cdot TxPSD_i^k}{\Gamma \cdot \left(\sum_{t \neq i \neq j}\left|H_{ij}^k\right|^2 \cdot TxPSD_j^k + \sigma_i^k\right)}\right) \qquad \text{(Eq. 6)}$$

In these calculations, $f_s$ = 4,3125 *kHz* is the tone space, $\Gamma$ the SNR (Signal-to-noise Ratio) gap (typically 9,75 dB) added to the actual noise margin, $TxPSD_i^k$ the transmitted PSD (Power Spectral Density) for user i at tone k, $\left|H_{ii}^k\right|^2$ the direct channel transfer function for user i at tone k, $\sigma_i^k$ is the noise which contains the stationary white Gaussian noise and alien noise and $\left|H_{ij}^k\right|^2$ is the FEXT channel from disturber j to victim i.

It will be clear to the skilled person that the above defined bitrates represent respectively a second parameter and a third parameter. Moreover, the skilled person will understand that the calculation offered here is only meant to illustrate a possible way of estimating such a second and such a third parameter, using only operational parameters as was discussed above. It will also be appreciated by the skilled person that these calculations can be performed in both the downstream and the upstream direction.

By expressing the vectoring differences in the vectoring gain matrix as bitrates in kbps (see scale 43), they are intuitively easy to understand and to interpret for operators.

Another possible application of embodiments of this invention is to detect a line which does not share the same physical binder as the other lines but is a member of the same vectoring group, by analysing the vectoring differences for victims 31, 41 and disturbers 32, 42. In this case, the corresponding row 34A, 44A and column 34B, 44B of both the vectoring gain matrix and the vectoring cost matrix contain only values that are (close to) zero, because there is no crosstalk coming from this victim and it is not impacted by the other disturbers.

Preferably, said method step of providing of said notification is based on at least one pre-determined threshold comprising a statistical parameter representative of a performance and/or an efficiency of at least one vectoring group of said plurality of channels.

In a first example, the vectoring group performance (as defined above) can be quantified using at least one such vectoring difference, or in particular, the vectoring gain matrix and/or the vectoring cost matrix. For this, we define the following rule:

- For each line i, the sum of bitrate gains is computed by:

$$\left(\frac{\sum_j g_{ij}}{N-1}\right) \geq g_{min} \text{ (Eq. 7)}$$

- For each line i, the sum of bitrate costs is computed by:

$$\left(\frac{\sum_j c_{ij}}{N-1}\right) \geq c_{min} \quad \text{(Eq. 8)}$$

where $g_{min}$ is the minimum gain required by the line and can be configured by operators, N is the number of vectoring line in a given vectoring group, $g_{ij}$ is defined by (Eq. 4) and $c_{ij}$ is defined by (Eq. 1).
- If a predefined number of lines (e.g. 90% of lines) respect (Eq. 7) and/or (Eq. 8), the vectoring can be considered to have good performance. In other words, most gains and/or evaded costs are above the required line minimum.

In a second example, the vectoring group efficiency (as defined above) can be quantified using at least one such vectoring difference, or in particular, the vectoring gain matrix and/or the vectoring cost matrix. For this, we define the following rule:

- For each line i, find the disturber j where:

$$g_{ij} = max_t(g_{it}) \qquad \text{(Eq. 9)}$$

- For each line i, find the disturber j where:

$$c_{ij} = max_t(c_{it}) \qquad \text{(Eq. 10)}$$

- If a predefined number of lines (e.g. 90% of lines) respect (Eq. 9) and/or (Eq. 10), the vectoring can be considered to have good efficiency. In other words, most gains and/or evaded costs are (close to) maximal for their respective line.

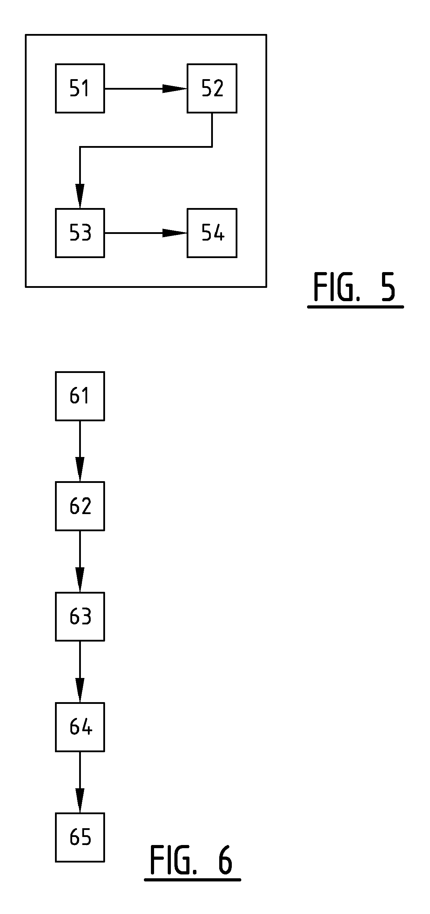

Figure 5 illustrates schematically an exemplary embodiment of a network analyser 50 according to the present invention. The network analyser 50 comprises a measurement unit 51, an estimation unit 52, a computation unit 53 and a notification unit 54.
The measurement unit 51 is configured for measuring at least one first parameter of said communication system during normal operation of said communication system.
The estimation unit 52 is configured for estimating at least one second parameter of said communication system under assumption of a uniform application status of said internal crosstalk cancellation mechanism, based on said measured at least one first parameter (illustrated in the figure by the arrow connecting the measurement unit 51 and the estimation unit 52). The estimation unit 52 is also configured for estimating at least one third parameter of said communication system under assumption of a non-uniform application status of said internal crosstalk cancellation mechanism, based on said measured at least one first parameter (also illustrated in the figure by the arrow connecting the measurement unit 51 and the estimation unit 52).
The computation unit 53 is configured for computing at least one vectoring difference between said at least one second parameter and said at least one third parameter (illustrated in the figure by the arrow connecting the estimation unit 52 and the computation unit 53).
The notification unit 54 is configured for providing a notification for an operator of said communication system based on said computed at least one vectoring difference (illustrated in the figure by the arrow connecting the computation unit 53 and the notification unit 54).
Figure 6 illustrates schematically an exemplary embodiment of a method according to the present invention. The method comprises the following steps: measuring 61 at least one first parameter of said communication system during normal operation of said communication system; estimating 62 at least one second parameter of said communication system under assumption of a uniform application status of said internal crosstalk cancellation mechanism, based on said measured at least one first parameter; estimating 63 at least one third parameter of said communication system under assumption of a non-uniform application status of said internal crosstalk cancellation mechanism, based on said measured at least one first parameter; computing 64 at least one vectoring difference between said at least one second parameter and said at least one third parameter; and providing 65 a notification for an operator of said communication system based on said computed at least one vectoring difference.
Whilst the principles of the invention have been set out above in connection with specific embodiments, it is to be understood that this description is merely made by way of example and not as a limitation of the scope of protection which is determined by the appended claims.

**Claims**

1. A network analysis method for analysing vectoring groups in a communication system with a plurality of channels between an access node and a plurality of end user nodes, said communication system being equipped with an internal crosstalk cancellation mechanism for reducing or cancelling internal crosstalk between said plurality of channels, comprising:

   - measuring at least one first parameter of said communication system during normal operation of said communication system;
   - estimating at least one second parameter of said communication system under assumption of a uniform application status of said internal crosstalk cancellation mechanism, based on said measured at least one first parameter;
   - estimating at least one third parameter of said communication system under assumption of a non-uniform application status of said internal crosstalk cancellation mechanism, based on said measured at least one first parameter;
- computing at least one vectoring difference between said at least one second parameter and said at least one third parameter; and
- providing a notification for an operator of said communication system based on said computed at least one vectoring difference.

2. The network analysis method of claim 1, wherein said at least one first parameter comprises at least one parameter representative for at least one of the following: an actual bitrate; an attainable bitrate; an actual noise margin; an electrical length; a loop length; an attenuation; and an actual used power.

3. The network analysis method of claim 1 or claim 2, wherein said at least one first parameter comprises, for each pair of channels of said plurality of channels, a crosstalk coefficient representative for far-end crosstalk.

4. The network analysis method of any of the previous claims, wherein said at least one second parameter and said at least one third parameter each comprise a parameter representative for a bitrate of a channel of said plurality of channels.

5. The network analysis method of any of the previous claims, wherein said estimating of said at least one second parameter under assumption of uniform application status of said internal crosstalk cancellation mechanism comprises:

- estimating said at least one second parameter for a situation in which crosstalk across said plurality of channels is not cancelled or reduced; and/or
- estimating said at least one second parameter for a situation in which crosstalk is cancelled or reduced across all channels of said plurality of channels; and

wherein said estimating of said at least third parameter under assumption of non-uniform application status of said internal crosstalk cancellation mechanism comprises:

- estimating said at least one third parameter for a situation in which crosstalk is cancelled or reduced for only one channel of said plurality of channels; and/or
- estimating said at least one third parameter for a situation in which crosstalk is cancelled or reduced for all but one channel of said plurality of channels.

6. The network analysis method of any of the previous claims, wherein said providing of said notification is based on at least one pre-determined threshold comprising a statistical parameter representative of a performance and/or an efficiency of at least one vectoring group of said plurality of channels.

7. The network analysis method of any of the previous claims, wherein:

- said measuring of said at least one first parameter is performed for each pair of channels of said plurality of channels;
- said estimating of said at least one second parameter and said estimating of said at least one third parameter are performed for each of said pairs, based on said corresponding at least one first parameter; and
- said computing of said at least one vectoring difference is performed for each of said pairs, thereby computing at least one vectoring matrix whose elements are said vectoring differences, for use in said providing of said notification.

8. A network analyser for analysing vectoring groups in a communication system with a plurality of channels between an access node and a plurality of end user nodes, said communication system being equipped with an internal crosstalk cancellation mechanism for reducing or cancelling internal crosstalk between said plurality of channels, comprising:

- a measurement unit configured for measuring at least one first parameter of said communication system during normal operation of said communication system;
- an estimation unit configured for estimating at least one second parameter of said communication system under assumption of a uniform application status of said internal crosstalk cancellation mechanism, based on said measured at least one first parameter; and for estimating at least one third parameter of said communication system under assumption of a non-uniform application status of said internal crosstalk cancellation mechanism, based on said measured at least one first parameter;

- a computation unit configured for computing at least one vectoring difference between said at least one second parameter and said at least one third parameter; and

- a notification unit configured for providing a notification for an operator of said communication system based on said computed at least one vectoring difference.

9. The network analyser of claim 8, wherein said measurement unit is configured for measuring at least one parameter representative for at least one of the following: an actual bitrate; an attainable bitrate; an actual noise margin; an electrical length; a loop length; an attenuation; and an actual used power.

10. The network analyser of claim 8 or claim 9, wherein said measurement unit is configured for measuring, for each pair of channels of said plurality of channels, a crosstalk coefficient representative for far-end crosstalk.

11. The network analyser of any one of the claims 8-10, wherein said estimation unit is configured for estimating at least one parameter representative for a bitrate of a channel of said plurality of channels.

12. The network analyser of any one of the claims 8-11, wherein:

said estimation unit is configured for estimating said at least one second parameter under assumption of uniform application status of said internal crosstalk cancellation mechanism by:

- estimating said at least one second parameter for a situation in which crosstalk across said plurality of channels is not cancelled or reduced; and/or
- estimating said at least one second parameter for a situation in which crosstalk is cancelled or reduced across all channels of said plurality of channels; and wherein:

said estimation unit is configured for estimating said at least one third parameter under assumption of non-uniform application status of said internal crosstalk cancellation mechanism by:

- estimating said at least one third parameter for a situation in which crosstalk is cancelled or reduced for only one channel of said plurality of channels; and/or
- estimating said at least one third parameter for a situation in which crosstalk is cancelled or reduced for all but one channel of said plurality of channels.

13. The network analyser of any one of the claims 8-12, wherein said notification unit is configured for providing said notification based on at least one pre-determined threshold comprising a statistical parameter representative of a performance and/or an efficiency of at least one vectoring group of said plurality of channels.

14. The network analyser of any one of the claims 8-13, wherein:

- said measurement unit is configured for measuring said at least one first parameter for each pair of channels of said plurality of channels;
- said estimation unit is configured for estimating said at least one second parameter and said estimating of said at least one third parameter for each of said pairs, based on said corresponding at least one first parameter; and
- said computation unit is configured for computing said at least one vectoring difference for each of said pairs, thereby computing at least one vectoring matrix whose elements are said vectoring differences, for use in said providing of said notification.

15. A computer program product comprising non-transitory computer-executable instructions for performing a method when the program is run on a computer, the method comprising all of the steps of any of the methods of any of the claims 1-7.

**Amended claims in accordance with Rule 137(2) EPC.**

1. A network analysis method for analysing vectoring groups in a communication system with a plurality of channels between an access node and a plurality of end user nodes, said communication system being equipped with an internal crosstalk cancellation mechanism for reducing or cancelling internal crosstalk between said plurality of channels, **characterized by** comprising:

   - measuring (61) at least one first parameter of said communication system during normal operation of said communication system;
   - estimating (62) at least one second parameter of said communication system under assumption of a uniform application status of said internal crosstalk cancellation mechanism, based on said measured at least one first parameter;
   - estimating (63) at least one third parameter of said communication system under assumption of a non-uniform application status of said internal crosstalk cancellation mechanism, based on said measured at least one first parameter;
   - computing (64) at least one vectoring difference between said at least one second parameter and said at least one third parameter; and
   - providing (65) a notification for an operator of said communication system based on said computed at least one vectoring difference;

   wherein said at least one first parameter comprises at least one parameter representative for at least one of the following: an actual bitrate; an attainable bitrate; an actual noise margin; an electrical length; a loop length; an attenuation; and an actual used power; and
   wherein said at least one second parameter and said at least one third parameter each comprise a parameter representative for a bitrate of a channel of said plurality of channels.

2. The network analysis method of claim 1, wherein said at least one first parameter comprises, for each pair of channels of said plurality of channels, a crosstalk coefficient representative for far-end crosstalk.

3. The network analysis method of any of the previous claims, wherein said estimating of said at least one second parameter under assumption of uniform application status of said internal crosstalk cancellation mechanism comprises:

   - estimating said at least one second parameter for a situation in which crosstalk across said plurality of channels is not cancelled or reduced; and/or
   - estimating said at least one second parameter for a situation in which crosstalk is cancelled or reduced across all channels of said plurality of channels; and
   wherein said estimating of said at least third parameter under assumption of non-uniform application status of said internal crosstalk cancellation mechanism comprises:

   - estimating said at least one third parameter for a situation in which crosstalk is cancelled or reduced for only one channel of said plurality of channels; and/or
   - estimating said at least one third parameter for a situation in which crosstalk is cancelled or reduced for all but one channel of said plurality of channels.

4. The network analysis method of any of the previous claims, wherein said providing of said notification is based on at least one pre-determined threshold comprising a statistical parameter representative of a performance and/or an efficiency of at least one vectoring group of said plurality of channels.

5. The network analysis method of any of the previous claims, wherein:

   - said measuring of said at least one first parameter is performed for each pair of channels of said plurality of channels;
   - said estimating of said at least one second parameter and said estimating of said at least one third parameter are performed for each of said pairs, based on said corresponding at least one first parameter; and
   - said computing of said at least one vectoring difference is performed for each of said pairs, thereby computing at least one vectoring matrix whose elements are said vectoring differences, for use in said providing of said notification.

6. A network analyser (50) for analysing vectoring groups in a communication system with a plurality of channels between an access node and a plurality of end user nodes, said communication system being equipped with an internal crosstalk cancellation mechanism for reducing or cancelling internal crosstalk between said plurality of channels, **characterized by** comprising:

- a measurement unit (51) configured for measuring at least one first parameter of said communication system during normal operation of said communication system;
- an estimation unit (52) configured for estimating at least one second parameter of said communication system under assumption of a uniform application status of said internal crosstalk cancellation mechanism, based on said measured at least one first parameter; and for estimating at least one third parameter of said communication system under assumption of a non-uniform application status of said internal crosstalk cancellation mechanism, based on said measured at least one first parameter;
- a computation unit (53) configured for computing at least one vectoring difference between said at least one second parameter and said at least one third parameter; and
- a notification unit (54) configured for providing a notification for an operator of said communication system based on said computed at least one vectoring difference;

wherein said measurement unit is configured for measuring at least one parameter representative for at least one of the following: an actual bitrate; an attainable bitrate; an actual noise margin; an electrical length; a loop length; an attenuation; and an actual used power; and
wherein said estimation unit is configured for estimating at least one parameter representative for a bitrate of a channel of said plurality of channels.

7. The network analyser of claim 6, wherein said measurement unit is configured for measuring, for each pair of channels of said plurality of channels, a crosstalk coefficient representative for far-end crosstalk.

8. The network analyser of any one of the claims 6-7, wherein:

said estimation unit is configured for estimating said at least one second parameter under assumption of uniform application status of said internal crosstalk cancellation mechanism by:

- estimating said at least one second parameter for a situation in which crosstalk across said plurality of channels is not cancelled or reduced; and/or
- estimating said at least one second parameter for a situation in which crosstalk is cancelled or reduced across all channels of said plurality of channels; and wherein:

said estimation unit is configured for estimating said at least one third parameter under assumption of non-uniform application status of said internal crosstalk cancellation mechanism by:

- estimating said at least one third parameter for a situation in which crosstalk is cancelled or reduced for only one channel of said plurality of channels; and/or
- estimating said at least one third parameter for a situation in which crosstalk is cancelled or reduced for all but one channel of said plurality of channels.

9. The network analyser of any one of the claims 6-8, wherein said notification unit is configured for providing said notification based on at least one pre-determined threshold comprising a statistical parameter representative of a performance and/or an efficiency of at least one vectoring group of said plurality of channels.

10. The network analyser of any one of the claims 6-9, wherein:

- said measurement unit is configured for measuring said at least one first parameter for each pair of channels of said plurality of channels;
- said estimation unit is configured for estimating said at least one second parameter and said estimating of said at least one third parameter for each of said pairs, based on said corresponding at least one first parameter; and
- said computation unit is configured for computing said at least one vectoring difference for each of said pairs, thereby computing at least one vectoring matrix whose elements are said vectoring differences, for use in said providing of said notification.

11. A computer program product comprising non-transitory computer-executable instructions for performing a method when the program is run on a computer, the method comprising all of the steps of any of the methods of any of the claims 1-5.

FIG. 1

**FIG. 2**
PRIOR ART

EP 2 983 348 A1

FIG. 3

FIG. 4

EP 2 983 348 A1

FIG. 5

FIG. 6

| | Europäisches Patentamt European Patent Office Office européen des brevets | **EUROPEAN SEARCH REPORT** | Application Number EP 14 30 6244 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOCHEN MAES ET AL: "Maximizing Digital Subscriber Line Performance", BELL LABS TECHNICAL JOURNAL, WILEY, CA, US, vol. 13, no. 1, 1 March 2008 (2008-03-01), pages 105-116, XP002591690, ISSN: 1089-7089, DOI: 10.1002/BLTJ.20285 [retrieved on 2008-05-15] * page 106 - page 110; figures 1,3,5 * | 1-15 | INV. H04M11/06 H04B3/46 |
| A | US 2012/106315 A1 (CHOW HUNGKEI [US]) 3 May 2012 (2012-05-03) * abstract; figure 4 * * paragraph [0037] - paragraph [0051] * | 1-15 | |
| A | EP 2 341 635 A2 (IKANOS TECHNOLOGY LTD [KY]; INDIAN INST OF TECHNOLOGY DELHI [IN]) 6 July 2011 (2011-07-06) * abstract; figures 2-5 * * paragraph [0048] - paragraph [0076] * | 1-15 | |
| | | | TECHNICAL FIELDS SEARCHED (IPC) H04M H04B |

The present search report has been drawn up for all claims

| Place of search | Date of completion of the search | Examiner |
|---|---|---|
| Munich | 16 December 2014 | Ohanovici, Z |

**ANNEX TO THE EUROPEAN SEARCH REPORT
ON EUROPEAN PATENT APPLICATION NO.**                    EP 14 30 6244

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2014

| Patent document cited in search report | Publication date | Patent family member(s) | Publication date |
|---|---|---|---|
| US 2012106315 A1 | 03-05-2012 | NONE | |
| EP 2341635 A2 | 06-07-2011 | CN 102104398 A | 22-06-2011 |
| | | EP 2341635 A2 | 06-07-2011 |
| | | JP 2011142624 A | 21-07-2011 |
| | | KR 20110074452 A | 30-06-2011 |
| | | US 2011150121 A1 | 23-06-2011 |

EPO FORM P0459

For more details about this annex : see Official Journal of the European Patent Office, No. 12/82

**EP 2 983 348 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13306636 A

- EP 2383899 A